(19) **Europäisches Patentamt**
**European Patent Office**
**Office européen des brevets**

(11) **EP 4 094 058 B1**

(12) **EUROPEAN PATENT SPECIFICATION**

(45) Date of publication and mention
of the grant of the patent:
**16.04.2025 Bulletin 2025/16**

(21) Application number: **21711965.0**

(22) Date of filing: **21.01.2021**

(51) International Patent Classification (IPC):
*G01K 1/02* (2021.01)    *G01K 3/04* (2006.01)
*G01K 7/34* (2006.01)    *G01K 11/06* (2006.01)
*G01K 1/024* (2021.01)    *G06K 19/07* (2006.01)

(52) Cooperative Patent Classification (CPC):
**G01K 1/024; G01K 3/04; G01K 7/343; G01K 11/06;
G06K 19/0717; G06K 19/0723;** G01K 2207/04

(86) International application number:
**PCT/IT2021/050018**

(87) International publication number:
**WO 2021/149087 (29.07.2021 Gazette 2021/30)**

(54) **HF RFID TRANSPONDER WITH IMPEDANCE RESPONSE CRITICAL TEMPERATURE
INDICATOR FUNCTIONALITY AND INTEGRATED MANUFACTURING METHOD**

HF-RFID-TRANSPONDER MIT IMPEDANZABHÄNGIGER KRITISCHER
TEMPERATURANZEIGEFUNKTIONALITÄT UND INTEGRIERTEM HERSTELLUNGSVERFAHREN

TRANSPONDEUR RFID HF À FONCTIONNALITÉ D'INDICATEUR DE TEMPÉRATURE CRITIQUE
DE RÉPONSE D'IMPÉDANCE ET PROCÉDÉ DE FABRICATION INTÉGRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2020 IT 202000001084**

(43) Date of publication of application:
**30.11.2022 Bulletin 2022/48**

(73) Proprietor: **ENEA - Agenzia Nazionale per le
Nuove Tecnologie,
l'Energia e lo Sviluppo Economico Sostenibile
00196 Roma (RM) (IT)**

(72) Inventors:
• **MISCIOSCIA, Riccardo
00196 ROMA (RM) (IT)**

• **DE GIROLAMO DEL MAURO, Anna
00196 ROMA (RM) (IT)**
• **IMPARATO, Antonio
00196 ROMA (RM) (IT)**
• **MINARINI, Carla
00196 ROMA (RM) (IT)**

(74) Representative: **Santi, Filippo et al
Barzanò & Zanardo S.p.A.
Via Piemonte 26
00187 Roma (IT)**

(56) References cited:
**US-A1- 2019 212 210**    **US-A1- 2019 353 529**
**US-B2- 10 408 686**    **US-B2- 11 467 042**
**US-B2- 8 228 172**

EP 4 094 058 B1

## Description

This invention relates to an impedance response temperature indicator integrated into an RFID (*"Radio Frequency IDentification"*) HF (*"High Frequency"*) system in the form of a chip or a chipless RFID transponder, and to a method of making such an integrated system.

## Technical field

More specifically, the invention relates to an electronic system comprising a passive HF RFID transponder incorporating in its circuitry and architecture a critical temperature indicator suitably designed to be made by means of low complexity processes and interfaced with readers with acquisition and analysis capabilities of the impedance spectrum of the transponder itself. The invention applies to the thermal monitoring of perishable goods or merchandise in the medical, agri-food or pharmaceutical sector, or in all cases where it is necessary to detect the exceeding of a predetermined temperature threshold.

The following description will relate to passive RFID HF transponders but it is evident that it must not be considered to be limited to that specific use.

## Background art

In recent years there has been a progressive development of identification systems designed to identify, for example, objects, people or animals, and based substantially on the transmission and reception of radio frequency signals. RFID technology is one of the most widely used technical solutions.

In particular, as is known, the RFID technology enables information to be obtained by means of an RFID system consisting of at least one RFID transponder (or RFID tag) and a reader which can be configured to read the data contained in each RFID tag and/or to write data on said RFID tags.

More specifically, the RFID technology is mainly used in industrial and commercial applications to identify and track objects, animals or people by associating them with a unique code and optionally with a memory that, as mentioned, can be read and/or written by said readers.

However, the information contained in the RFID tag attached to the object to be tracked may vary, for example, due to changes made by the reader, or because the RFID tag has acquired, over time, a set of values associated with respective physical or chemical quantities relating to the environmental conditions to which the object has been subjected.

In fact, these RFID tags have been progressively equipped with sensors capable of detecting and storing physical quantities or parameters such as, for example, pressure, temperature or humidity in the surrounding environment. By way of example, these parameters may also depend on the presence of gases or other chemical contaminants, or on the contact of RFID tags with specific biological agents.

Typically, the *"sensitive"* RFID systems, that is, systems comprising RFID tags with integrated sensors, comprise a microcontroller interfaced with one or more sensors in the tag in order to acquire data ([1],[2],[3],[4]) and make it available, immediately or subsequently, to a computer system typically connected to the reader.

More specifically, specific chips for RFID tags integrate sensors and thus enable the transduction of physical quantities of interest into respective electrical signals, which are then digitised and stored until the data is read.

The data acquisition by said RFID tags comprises solutions based on "active" tags, where data acquisition from the sensors is supported by a long-lasting power source (such as a battery), or solutions based on *"passive" or "semi-passive"* RFID tags, wherein the energy required to operate the RFID tag persists as long as an electromagnetic coupling with the reader is present.

Further prior art solutions comprise readers capable of detecting, digitising, processing and storing data, thus making the presence of batteries on board the RFID tag optional and therefore limiting implementation costs. This is cost-effective as RFID systems typically have fewer readers than RFID tags.

However, there are drawbacks to these prior art solutions.

A drawback of these prior art solutions is that they comprise devices and equipment that are not technologically advanced ([5],[6]).

A further drawback of these prior art solutions is that they allow the detection of on/off type information, which is typically characterised, in one of the two possible states, by the loss of the interface towards the chip ([7]).

In this scenario, it is therefore desirable that the effect of the sensor consists in modulating the electrical signal exchanged between the RFID transponder and the reader in a way that is appreciable but which does not affect the communication between the chip included in the RFID transponder and the reader (and vice versa).

For this reason, the sensor, understood as a parasitic element of the tag circuit, should preserve the connectivity foreseen by the most commonly adopted standards by additionally introducing in the communication channel information related to the transduced quantity according to what has already been shown from a theoretical point of view [8] and that falls under the generic definition of *"Physical Layer Identification"* (PLI) of wireless devices.

However, a drawback of applying the PLI method according to such prior art solutions is that, typically, its implementations require readers with performance and complexity characteristics nearer to laboratory measurement instruments than to consumer electronics. This has limited its widespread use for many years.

In fact, at a more detailed level, the approach based on the PLI can consist of modulating the admittance of the transponder by varying the admittance of a sensor. This strategy lends itself to laboratory testing using impedance measurement instruments, spectrum analysers and network analysers (in particular *Vector Network Analysers,* VNAs) that already support the laboratory testing of standard RFID components such as, for example, for the HF band ([9-11]).

RFID systems comprising one or more sensors are currently known ([7], [12], [13], [14] and [15]). In particular, in the context of *"sensitive"* RFID systems applied to monitoring the quality and safety of perishable goods, temperature is considered one of the most important parameters, as it is directly linked to the shelf life of the products themselves. As is known, chemical or bacteriological degeneration phenomena are thermally activated.

Therefore, in some sectors it is essential to monitor and control, in real time, the changes from the optimal thermal storage conditions of these goods.

In this sense, for example, *"smart-packaging"* makes it possible to monitor the condition of many varieties of products by measuring parameters associated with the environment surrounding the packaged object, including the temperature ([18]).

For this reason, and in accordance with the compatibility conditions already enshrined in European legislation ([19]), the solutions based on *smart-packaging* are of crucial importance from both a social and an economic point of view.

In particular, these prior solutions typically involve, downstream of the data acquisition, a computer system capable of providing such data to the operator. The latter will then assess the action to be taken on the specific packaging based, among other things, on the thermal history of the product under consideration.

Therefore, in general, it is desirable that the parameters monitored through such solutions are made available in digital form in such a way that data acquisition can be managed in a secure, automated and reliable manner, minimising human input for repetitive and time-consuming operations.

Moreover, although there are prior art solutions ([20]) wherein a temperature sensor, in the form of a capacitive electronic device, has been integrated into an RFID transponder of known type without impacting on the structure and cost of the RFID transponder except for making only the sensor, the constraints of constructive simplicity and cost-effectiveness dictated by the applications, impose that HF RFID transponders without an on-board battery (passive) are adopted.

However, a possible drawback of using passive transponders is that the sensor itself is only powered, and therefore interrogated, when the RFID transponder is electromagnetically coupled to the reader.

For this reason, if a critical thermal event (such as, for example, exceeding a pre-established threshold of the cold chain) occurs during a phase in which the carrier is not available to the RFID tag, (under the assumption of reversibility of the sensor characteristic) this event will necessarily be lost and therefore not detected by the device.

In particular, in a variety of smart-packaging applications, *Time-Temperature Indicators* (TTIs) are required to have: simplicity of construction, low manufacturing costs, a design intended to be attached to the outside of the package ("External Indicators"), and the ability to record and report the complete or partial thermal history of the product by providing an indication of the remaining life of the product ([21-22]).

The most common TTIs are able to change state permanently in order to report to the customer (and/or warehouse manager and/or distributor and/or, in general, to the supply chain) information on thermal events significant for the shelf-life of the product.

To this end, the TTI typically changes colour gradually, signalling the occurrence of a thermal peak. A classification of the TTIs can be made on the basis of the principle governing their change of state (physical, chemical, biological, etc.) [23].

If there is a threshold subsystem within the temperature indicator, the gradual transition of the TTI state will be converted to an on-off type indication with an abrupt transition between the two states. In this particular case we speak of *Critical Temperature Indicators* (CTI).

More specifically, the CTIs report the exceeding of a predetermined thermal threshold without explicit reference to the time spent by the object in above-threshold conditions because the CTI transition is assumed to be very short-lived compared to the dynamics of the monitored thermal events.

This type of device has many applications in the detection of exothermic processes linked to biological or chemical phenomena typical of products transported in food and pharmaceutical supply chains, more generally in the cold chain where unpredictable or systematic events can compromise the quality and safety of the goods transported, and finally in live electrical or industrial equipment where overheating events are possible.

The great advantage of TTIs, and CTIs, is that they can typically change state irreversibly even in the absence of a power supply (since in passive RFIDs the power source is the reader, this translates in our case into a condition where there is no carrier signal to the tag). This makes TTIs and CTIs compatible with the integration into a passive RFID transponder, a solution that in turn is interoperable with the low-cost, portable device previously developed in [16].

The relevant prior art technique comprises patent application CN103543146A ([24]) concerning a particular type of electronic tag that simultaneously integrates time-temperature indicator and RFID system functionality. In particular, the sensor on board the RFID tag is a conductive type sensor connected in series to the chip of the RFID tag and the time-temperature indicators provided by this prior art solution are optically readable time-temperature indicators.

A drawback of this prior art solution is that the chip included in the RFID tag is not available when the critical time-temperature dose is reached.

A further drawback of this prior art solution is the optical accessibility of the indicator, which exposes it to readings not conveyed through a dedicated reader.

Further, the relevant prior art technique comprises patent application EP2523147A1 ([25]), which describes an RFID system comprising a reader capable of sending a command to the transponder chip, which in turn, following this command, acquires data coming from a sensor interfaced with its own specific digitising subsystem. In detail, the parameter detected will be mapped in the memory the RFID chip and finally acquired by reading a block or sector of the memory of the RFID chip.

However, a drawback of this prior art solution is that the invention requires a dedicated chip (specifically designed) capable of, inter alia, sampling, quantization and analogue/digital conversion of the sensory data, as well as processing commands, and connected to a component with an electrical generator function (battery or the like). For these reasons, this prior art solution involves high implementation costs.

Finally, the patent US2016328584 ([27]) describes quite faithfully the basic methods also used in [16], applied to UHF RFID tags and using a reader rather different from the one in [16] since it employs a tuner circuit while in [16] direct signal synthesis and spectrum reconstruction from the envelope is used.

Furthermore, patents US2016328584 ([27]) and WO20160938A2 ([28]) generically refer to temperature sensors but do not directly address the issue of sensors changing state in the absence of energy.

In particular, the RFID tag, as far as the sensitive part is concerned, uses the same physical principle to convey information as adopted in [16].

However, the solution in [27], both from the point of view of the system architecture and the infrastructure on which it relies, is technologically very different from that in [16].

In more detail, the solution described in [27] is based on the Magnus-S IC integrated circuit which is a chip for UHF passive RFIDs operating in the frequency range from 860 MHz to 960 MHz. The ISO 18000-6C standard [28], which regulates the RFID communication in this frequency band, prohibits the reader from transmitting at a fixed frequency for an unlimited time.

For this reason, before a pre-set time limit is reached, the UHF reader must switch off or switch to another frequency selected in a specific range (frequency hopping) and the UHF chips must have the ability to work in optimal conditions (load and bandwidth matching) at all frequencies within the given range.

The Magnus-IC chip [29] is able to detect the changes in antenna impedance through analogue circuits present in the chip itself and to change its impedance accordingly in order to achieve the matching condition ($Z1 = Z2^*$, where $Z1$ is the antenna circuit impedance and $Z2$ is the tag impedance or vice versa).

The impedance of the antenna circuit of the UHF tag in [27] can change for two reasons: because the reader has changed its transmission frequency or because a sensor (typically capacitive) is connected in the antenna circuit. The technology patented in [30] that allows the impedance of the transponder to be adapted is called "Chameleon" and entered the field of sensitive passive RFIDs in the second half of 2016 [29].

Using the Chameleon technology, the chip "measures" the impedance of the antenna circuit at all times and adjusts its impedance to obtain the maximum electrical power transfer from the reader, thereby maximising the reading distance (which can be up to approximately 8 m).

The applications of such sensitive tags have been adopted both for monitoring perishable goods (temperature) [31], in automotive sensors (moisture intrusion detection, pressure sensors to be applied to seats, tags to be applied to metal surfaces using the autotuning function) [32], in the biomedical field [33], and finally in the surveillance of industrial processes [34].

However, with reference to the solutions reported in [1-2, 24-29] and particularly in patent US2016328584 [27] and in patent WO2016060938A2 [28], these prior art solutions present an additional drawback given that the technologies developed mainly rely on the presence of the chip on board the RFID transponder to perform data acquisition or signal processing associated with the RFID transponder.

Patent US 2019/212210 A1 describes a threshold temperature indicator, wherein a fluid may flow to a chamber of the indicator after melting from an initially solid state. The indicator chamber comprises a capacitor and an absorbent material to absorb the flowing fluid. However, patent US 2019/212210 A1 envisages the passage of the fluid through the armatures of the capacitor and describes a chipless transponder, with no use of chips. This limits the capacity of connection and backward compatibility of the transponder with conventional reading systems.

Moreover, patent US 2019/212210 A1 describes a structurally complex architecture, comprising tanks, microfluidic channels, porous partitions or pathways and activation mechanisms. In particular, US 2019/212210 A1 describes the presence of two or three separate chambers: a tank for the liquid that can change state, an indication chamber, optionally, a ventilation path or chamber.

**Scope of the invention**

In view of the above, it is therefore scope of the present invention to overcome the above-mentioned drawbacks by providing an impedance response temperature indicator which can be integrated into HF RFID systems in the form of chip or chipless RFID transponders and a method of making such a temperature indicator.

Another scope of the invention is to provide a non-optical temperature indicator.

A further scope of the invention is to provide a temperature indicator that does not impair the reading of the unique identifier by the chip (UID) and the contents of the memory of the RFID transponder chip.

Another scope of the invention is to provide a temperature indicator that can be integrated into an RFID system compatible with a screen printing type process, which can be operated in-line or on a roller-belt production line.

A further scope of the invention is to reduce the cost and complexity of the tag-indicator system by increasing the variety of products to which it can be applied.

Another scope of the invention is to provide a temperature indicator which is highly reliable, relatively easy to make, and has competitive costs if compared with the prior art.

A further scope of the invention is to provide the tools necessary for the execution of the method for making the temperature indictor and the apparatuses which execute the method.

**Object of the invention**

It is therefore specific object of the present invention an RFID transponder as defined in claim 1.

It is also a specific object of the present invention a method for making an RFID as defined in claim 6.

**Brief description of drawings**

The invention is now described, by way of example and without limiting the scope of the invention, with reference to the accompanying drawings which illustrate preferred embodiments of it, in which:

Figure 1 shows, in a schematic view, a layout of an embodiment of an RFID transponder in which a temperature indicator is integrated, according to the invention;

Figure 2 shows a circuit diagram of the RFID transponder of Figure 1;

Figure 3 shows a sectional view of the temperature indicator included in the RFID transponder, according to Figures 1 and 2;

Figure 4 shows, in a schematic view, the operating steps of said temperature indicator of Figure 3;

Figure 5 shows, in a schematic view, the effect of a phase transition of a sensitive material on the electrical capacitance of said temperature indicator, according to Figures 3 and 4;

Figure 6 shows a table showing the values of the melting temperatures at atmospheric pressure of the polyethylene glycol polymer (PEG) with the variation of its molecular weight as reported in [40];

Figure 7 shows the steps of a process for making a double layer consisting of a layer of absorbent paper and a layer of sensitive material, according to Figures 3-6;

Figures 8A and 8B show two images captured by an optical microscope relative to the surface of a layer of paper on which a PEG 6000 polymer has been deposited by a precipitation method according to the invention;

Figure 9 shows, in detail, the steps of the process for making the double layer, according to Figure 7;

Figure 10A shows a depositing of the PEG 6000 polymer on a layer of paper, wherein the PEG 6000 polymer has been prepared in acetone and water, respectively, at a concentration of 20% by weight;

Figure 10B shows a depositing of the PEG 6000 polymer on a layer of paper, wherein the PEG 6000 polymer has been prepared in toluene and chloroform, respectively, at a concentration of 20% by weight, according to Figure 10A;

Figures 11A, 11B, 11C, 11D, 11E show, respectively, scanning electron microscope images of the layer of paper prior to depositing, of PEG 6000 dissolved in acetone and deposited on the layer of paper, of PEG 6000 dissolved in water and deposited on the layer of paper, of PEG 6000 dissolved in chloroform and deposited on the layer of paper, and of PEG 6000 dissolved in toluene and deposited on the layer of paper;

Figure 12 shows a schematic view of the process of making said temperature indicator according to the invention;

Figure 13A shows a connection between the RFID transponder and a vector network analyser connected to a standard wire-loop antenna;

Figure 13B shows, in detail, the RFID transponder according to Figure 13A while it is housed in the seat containing the interrogation loop antenna (standard wire-loop);

Figure 14 shows a case of exceeding the melting temperature of the PEG6000 polymer by heating the tag on a heating plate;

Figure 15 shows a graph showing the variation in the impedance spectrum of the RFID transponder due to exceeding the thermal threshold according to Figure 14;

Figure 16 shows a table showing the experimental results in terms of frequency and quality factor for the RFID transponder, according to Figure 15;

Figures 17A and 17B show, respectively, an RFID reader based on commercial chip NXP MFRC522 ([42]) which acquires the unique identifier of the RFID transponder lacking said temperature indicator and of the RFID transponder comprising said temperature indicator, according to the invention;

Figure 18 shows a further embodiment of the chipless RFID transponder comprising the temperature indicator, according to the invention;

Figure 19 shows a graph showing the impedance spectrum of the chipless RFID transponder before and after thermal activation of the temperature indicator, according to Figure 18;

Figure 20 shows a graph showing the real part of the impedance of the chipless RFID transponder before and after thermal activation of said temperature indicator, according to Figure 19;

Figure 21 shows a table showing the experimental results in terms of frequency and quality factor for the chipless RFID transponder according to Figure 19; and

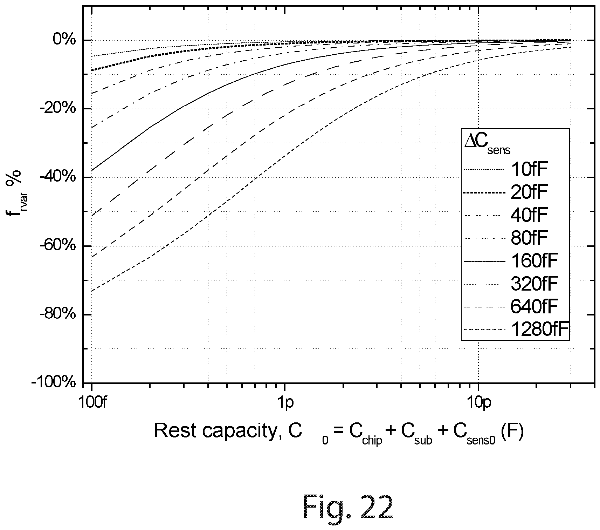

Figure 22 shows a graph showing the variation of the resonance frequency with the variation of the rest capacity as a function of the capacity variations of said temperature indicator according to Figures 18 to 21;

The similar parts will be indicated in the various drawings with the same numerical references.

## Detailed description

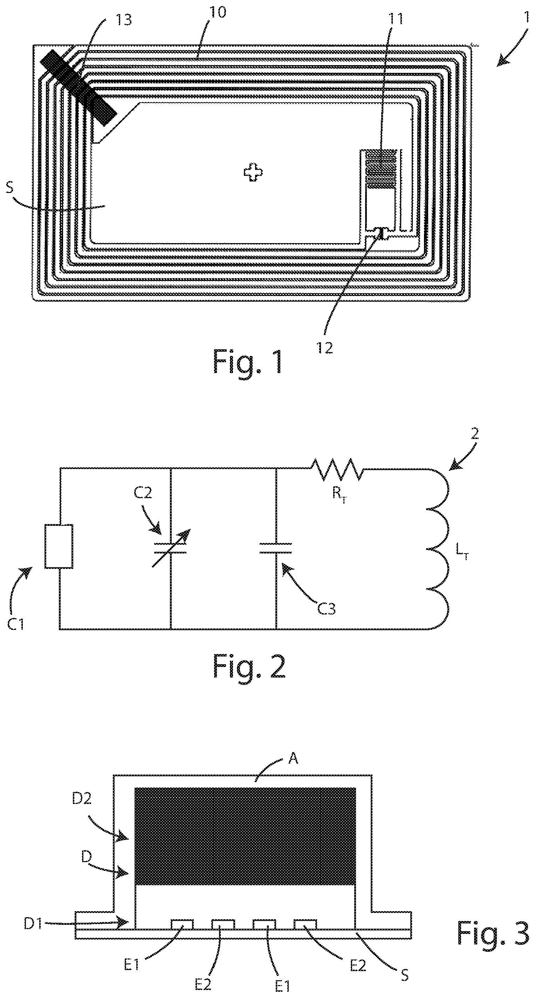

Figure 1 shows the RFID transponder, indicated in its entirety by reference numeral 1, in which the temperature detection means 11 according to the present invention are integrated.

Said RFID transponder, substantially comprises a dielectric support S, an antenna 10 arranged on said dielectric support S, said temperature detection means 11 connected to said antenna 10 and arranged on said dielectric support S, a seat 12 for housing a chip (not shown in the drawings), and a conductive element or conductive bridge 13 isolated from said dielectric support S and arranged on said antenna 10 which places in contact the outermost coil of said antenna 10 with the connection track to said chip.

According to the embodiment described, said RFID 1 transponder or RFID 1 tag is a passive HF RFID tag. For this reason, said RFID tag 1 does not have its own energy source but draws it from the electromagnetic field generated by a reader (not shown), and operates at high frequencies (*"High Frequency" or* HF), that is, in the 13.56 MHz frequency band.

However, in further embodiments, the RFID tag 1 may, for example, also be an active or semi-passive RFID tag, and may operate at frequencies other than HF frequencies, such as UHF (*"Ultra High Frequency'*).

According to this embodiment, said dielectric support or dielectric substrate S is a layer of plastic material. However, in other embodiments of the invention, said substrate S may be made, for example, of glass, PEN (*"Polyethylene Naphthalate"*), PET (*"Polyethylene Terephthalate"*), or particular types of paper.

Moreover, said substrate S may be rigid or flexible, impermeable or may have a reduced permeability to water or various liquid materials.

As can be seen from Figure 1, said antenna 10 is an inductive antenna comprising eight coils. These coils are made of silver, specifically by means of a silver paste (Dupont™ Solamet® PV416) printed by screen printing and treated thermally.

However, such coils can be made using additional electrical conductors such as, for example, aluminium or copper. By way of example, the coils that make up said antenna 10 are approximately 20 $\mu$m thick and the largest size coil has a total area of 76 mm $\times$ 45 mm. Each coil of said antenna 10 is 1 mm wide and is 0.3 mm from the coil immediately following or preceding it.

As mentioned, the RFID tag 1 comprises temperature detection means 11 for detecting temperature values of an object to which said RFID tag 1 is applicable.

In particular, said temperature detection means 11, such as, for example, a time-temperature indicator or integrator, are capable of detecting temperature values or time values and/or temperature values, integrating these values into a single data item. Moreover, as will be described below, said temperature detection means 11 are capable of being activated when they are applied or bonded to the substrate S of the RFID tag 1.

Moreover, as will be described in more detail below, said conductive element or bridge 13 is isolated from said substrate S of said RFID tag 1, as is the case for many prior art RFID transponders. By way of example, said bridge 13 may be applied manually to said antenna 10, connecting it, by means of silver paste, to said antenna 10.

In an embodiment of the invention, said RFID tag 1 has a substrate S having dimensions of 85.60 mm $\times$ 53.98

mm, according to ISO/IEC 7810 ID-1. However, in further embodiments, said RFID 1 tag may have a different form from that provided for in ISO/IEC 7810 ID-1.

Figure 2 shows the equivalent circuit 2 of said RFID tag 1 in a sinusoidal regime, when said chip is housed in said seat 12.

Said circuit 2 comprises a first capacitor C1, a second capacitor C2 electrically connected in parallel to said first capacitor C1, a third capacitor C3 electrically connected in parallel to said first capacitor C1 and to said second capacitor C2, a resistor $R_T$ and an inductor $L_T$ electrically connected in series to each other and electrically connected in parallel to said capacitors C1, C2 and C3.

In particular, in an embodiment of the invention, said first capacitor C1, associated with said chip, has an electrical capacitance, evaluated at 13.56 MHz, of between 14.9 pF and 19 pF, with a typical value of 16.9 pF. This electrical capacity value is relative to one of the most common chips, namely the NXP MIFARE Classic EV1 1K chip [36].

Said second capacitor C2, relative to said temperature detection means 11, is a capacitor electrically connected in parallel to said antenna 10. Said antenna 10 and said capacitor C2 are manufactured by means of planar technology, with an interdigitated layout, for example by means of a screen printing process.

Said third capacitor C3 is relative to the parasitic capacitances due to said substrate S, said bridge 13 and the interconnections.

For this reason, net of these parasitic capacitances, and net of the ohmic losses associated with $R_T$, the inductance $L_T$ required for said antenna 10 will be in the range 3921 nH - 7651 nH. In the present case, said antenna 10 has a theoretical inductance of approximately 5600nH.

In order to limit the impact of the electrical behaviour of said temperature detection means 11 on the communication between said RFID tag 1 and said reader (not shown), said temperature detection means 11 comprise two interdigitated electrodes E1, E2, wherein each electrode E1, E2 has a "comb-shaped" structure.

Each electrode E1, E2 in turn comprises 5 fingers F1, F2 respectively.

In this embodiment, each finger F1, F2 has a thickness of about $20\mu$m as does said antenna 10 (as they are made in the same screen printing step), a width of 350 $\mu$m and a distance from finger F1 to the adjacent finger F2 of 350 $\mu$m.

In particular, the facing length between two fingers F1, F2 is 4.3 mm while the total length of a finger F1, F2 is 4.65 mm. However, in other embodiments the sizing of said fingers F1, F2 may be different, compatibly with the required resonance frequency and the values of the other devices present in the antenna circuit.

Therefore, under these conditions, said second capacitor C2 presents a no-load capacitance or "$C_{sensor}$" (that is, in the absence of dielectric applied on the armatures) of approximately 0.3 pF when deposited on the 125 $\mu$m thick PEN material and measured in sinusoidal regime at a frequency of 100 kHz. It is to be expected that this capacity will be even lower at the carrier frequency.

As described in more detail below, the event detected by said temperature detection means 11 is transduced into a variation of electrical impedance and in particular a variation of capacitance which directly impacts on the resonance frequency of said RFID tag 1.

The proposed solution benefits from the application of the method and apparatus described in [16], which was experimentally tested with a frequency resolution of approximately 5 kHz.

Despite the fact that laboratory setups are already well established and reliable, the reason for choosing the reader mentioned in [16] is that in the field it is not always possible to equip oneself with expensive and cumbersome laboratory instrumentation and it is better, instead, to use a reader with a low cost, small size, low complexity but able to provide (in an approximate manner) information on the state of the indicator through the analysis of the electromagnetic spectrum.

In detail, by means of the techniques described in [16], a reconstruction of the envelope spectrum of the magnetic signal concatenated between said RFID 1 transponder and a suitably calibrated generator is acquired.

In one embodiment of the invention, given that $L_T$=5.6 $\mu$H and neglecting the antenna resistor, the RFID tag 1 will resonate at a frequency of 13.56 MHz if the overall load capacity (which includes the contributions from said chip, said temperature detection means 11, parasitic capacitance and said bridge 13) will be $C_{tot0}$ = 24.6 pF.

Under these assumptions, a variation in resonant frequency $\Delta f_r$ = 5 kHz (normally appreciable by means of the patent [16] which, in theory, can go down to frequency steps in the order of Hz) will result in a total variation in capacitance of:

$$\Delta C_{tot} = C_{tot0} - sgn(\Delta f_r) \cdot \frac{1}{L\left(2\pi\left(f_{r0} + \Delta f_r\right)\right)^2} = 18.3 fF$$

Using the system described in [16], it is therefore possible to acquire even small variations in capacity. By way of example, these capacitances can range from values in the tens of fF to values in the order of pF or higher.

Figure 3 shows, in detail and in partial section, a portion of said RFID tag 1 comprising said temperature detection means 11 arranged on said substrate S. Figures 3, 4 and 5 schematically show, by way of example only, for simplicity and without in any way limiting the scope of the invention, devices with only two fingers F1 and F2.

Said temperature detection means 11 comprise a multilayer dielectric structure D comprising in turn a first dielectric layer D1 which contacts said dielectric substrate S, and a second dielectric layer D2 arranged on said first dielectric layer D1. As can be seen from Figure 3, said second dielectric layer D2 does not contact said dielectric substrate S.

As described in more detail below, said first dielectric layer D1 comprises a polymeric type material conformable by pressure and having a respective melting temperature, and said second dielectric layer D2 comprises permeable media capable of absorbing by capillarity said material in its molten state.

For this reason, the substrate S, on which the RFID tag is made, is not permeated but, instead, the porous means on which the material is deposited are permeated. This makes it possible to make the tag 1 and the indicator 11 separately, to store them separately (the tag 1 at room temperature whilst the indicator 11 below its activation temperature) and to couple them only when the tag 1 itself needs to be made.

Moreover, after activation of the indicator 11 and melting of the material, the tag 1 can be recovered after separating the indicator 11 from the substrate S and used in the manufacture of a new integrated RFID indicator, in a view to waste reduction and a reusability of the products with a clear impact on the life cycle of the tag 1 itself.

In particular, on said dielectric substrate S bearing the interdigitated electrodes E1, E2 described above, a material or sensitive material is applied by pressure, preferably having a "soft" consistency and conformable by pressure. By way of example, this pressure could be, for example, that of a wax so that it can be cold-moulded onto the armatures of capacitor C2.

Such sensitive material is integral with said permeable means, such as, for example, a layer or sheet of absorbent paper or another medium capable of absorbing by capillarity the sensitive material after its melting.

The set of layers D1, D2, E1, E2, S is fixed and protected by an adhesive layer A which has the task of covering, protecting said temperature detection means 11 and preventing detachment of the layer D1 from the substrate S. More in detail, said layer A exerts, in use, a pressure on the multilayer dielectric structure D, in the direction of the dielectric substrate S.

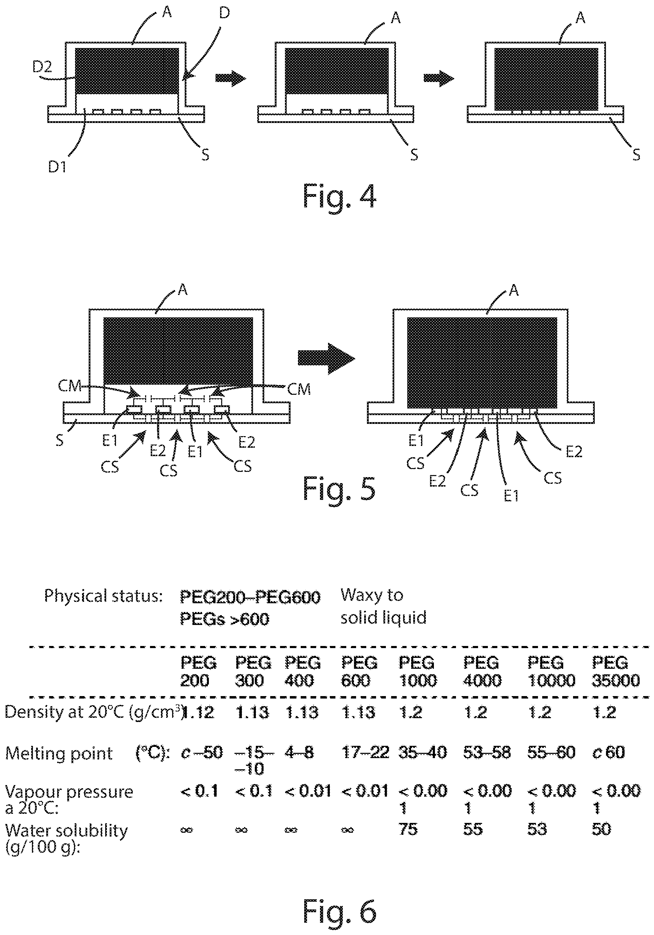

With particular reference to Figure 4, initially said temperature detection means 11 comprise a double layer having the material to be melted in contact with the electrodes E1, E2 and the layer of absorbent paper separated from said material and from said interdigitated electrodes E1, E2.

Providing said temperature detection means 11 are not exposed to temperatures higher than the melting temperature of the sensitive material, the capacitance of said second capacitor C2 will not appreciably change (Figure 4, step A) since the physical structure of the dielectrics (substrate S and double layer) of said second capacitor C2 will not change.

When the substrate S is heated above the melting temperature of the sensitive material, the latter passes to the liquid phase (Figure 4, phase B) and begins to permeate by capillary action said absorbent paper until it is completely incorporated in it.

The tension of the protective layer A, compresses the double layer D1, D2 constituted by said sensitive material and said sheet of absorbent paper, facing the armatures E1, E2 of said second condenser C2, obtaining the situation of Figure 4, step C.

When the sensitive material has completely permeated the layer of absorbent paper, there will no longer be an appreciable amount of sensitive material in contact with the conductive armatures E1, E2 and the dielectric will instead consist of the sheet of paper soaked in the melted and resolidified material.

For this reason, the capacitance of the interdigitated capacitor C2 will modify irreversibly from that given in step A (having the sensitive material as the closest dielectric) to that characterising step C in which the dielectric is the sheet of absorbent paper soaked with sensitive material.

The variation in dielectric constant will result in a variation in electrical capacitance, which in turn will affect the resonant frequency of the RFID transponder 1 in a first approximation according to the Thomson relation, a variation which in turn can be recorded using the apparatus in the patent [16].

Once fusion has been achieved, no thermal event can restore the geometry of the initial double dielectric layer.

For this reason, this variation in electrical capacity may occur at any time regardless of whether the RFID tag 1 is electrically powered through its inductive coupling and may, therefore, be acquired at any time, overlapping or following the thermal event.

This ensures that the temperature indication can be captured and stored without the need to supply power to the chip of said RFID tag 1.

The reader described in [16] can then be used to acquire the radio frequency spectral signature of the RFID tag 1 before the thermal event and, subsequently, by means of a prior art reader(/writer), store this signature or more properly one of its checksums (that is, the resonance frequency and the timestamp of the reading) in the memory of the chip.

At any time during the life of the RFID 1 tag, the patent [16] can be used to acquire the radio frequency signature of the RFID 1 tag and then compare it with what is stored on the chip, thus detecting the occurrence of the thermal event.

Preferably, the sensitive material will be a polymeric material with a waxy consistency and a low melting point (useful, for example, in logistics applications for medicines or in the food cold chain) while the layer of paper will be a porous paper appropriately chosen according to its porosity and capillarity characteristics.

In particular, the phase transition will be reflected in a structural variation in the capacitance created between the fingers F1, F2, according to Figure 5.

In fact, a first plurality of constant capacitances CS, that is, the capacitances towards the substrate S, and a second plurality of variable capacitances CM, that is, the capacitances towards the sensitive material contribute to the electrical capacitance of the temperature detection means 11.

The capacitance of said capacitor C2 can also be calculated in an approximate way by means of analytical techniques [37] and more precisely as described by Igreja et al. in [38] provided that the approximations mentioned in [38] are valid and in particular the assumption of armatures with a much smaller thickness than the dielectric layers. The elliptic integral of the first kind in the relations in [38] required to calculate the capacity of the elementary cell can be determined numerically as shown in [39].

Particular attention should be paid to the manufacturing process of the "absorbent paper-sensitive material" double-layer (also called double-layer or dielectric double-layer in the following description).

In the embodiment described, a polymer commercially available in large batches and at a low price, such as polyethylene glycol (PEG), also known as polyethylene oxide (PEO) or polyoxyethylene (POE), was selected as the sensitive material.

In more detail, the PEG is a semi-crystalline polymer, currently widely used in industrial applications because it is bioadhesive and mucoadhesive due to its solubility in water, hydrophilic, highly viscous, capable of forming hydrogen bonds and biocompatible ([41]). This material is used in many solution deposition processes as it is compatible with most organic solvents and is characterised by low toxicity.

In particular, said PEG material, depending on the molecular weight with which it is formulated and distributed, can be used with a plurality of melting temperatures, thus allowing temperature detection means 11 to be made for different applications [40].

In particular, the melting temperatures range from -50°C for PEG200 to 60 °C for PEG10000 and 4-8 °C for PEG400. The table in Figure 6 shows these melting temperature values ([40]).

Due to the versatility of this material, it was chosen for the formulation of the sensitive layer M. In particular, as described below, the first tests were carried out using PEG6000.

**Experimental results**

Firstly, an RFID 1 transponder with a chip was made and tested.

The RFID tag 1 was integrated with temperature detection means 11 using PEG6000 (CAS 25322-68-3) as the sensitive material, which is commercially available from the company Phygenera at a retail price of approximately 50 Euros/kg.

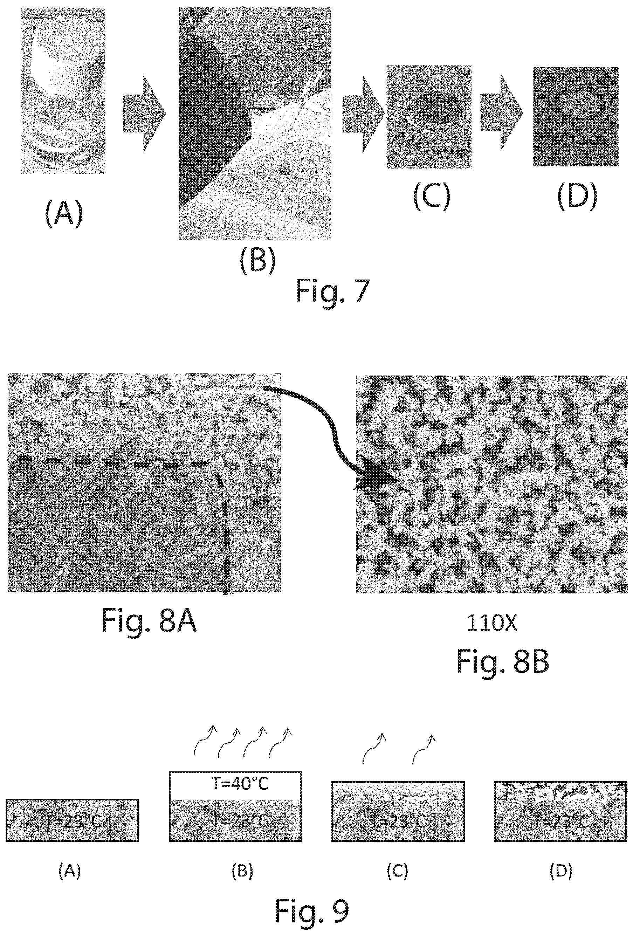

The material is dissolved in acetone at a concentration of 20% by weight and kept in agitation at a constant temperature of 40°C (Figure 7A).

A sheet of recycled cardboard (Cartesar (RE)Notes) is kept at a constant temperature of 23°C through a Peltier cell system or equivalent. Lastly, the melted, hot solution (initially at 40°C) is dripped onto the substrate using a drop-casting technique (Figure 7B).

Once deposited, the solution cools to room temperature (Figure 7C) bringing the dissolved PEG below the permissible temperature and pressure conditions for its presence in solution so that, as the acetone evaporates, the PEG precipitates and deposits on the paper substrate leaving a milky, porous patina of PEG. Meanwhile, the acetone partially permeates the paper and simultaneously evaporates forming the double material-paper layer required to make said temperature detection means 11 (Figure 7D).

After drying at room temperature, the sheet of cardboard will have a structure as shown in Figures 8A-8B.

The procedure adopted allows the deposition of the PEG6000 material to be carried out in a single step without resorting to sophisticated techniques.

The PEG6000 is processed from powder or pellet product, dissolved in acetone and deposited by carefully controlling the temperature of the substrate and the prepared solution.

Moreover, the choice of dissolution and deposition temperatures, as well as the porous material and solvent adopted enables the PEG to be deposited from solution without it penetrating the porous capillary medium. In particular, without the adoption of the measures mentioned above and shown in Figures 7A-7C, the multilayer structure described above could not be made to perform the indicator function.

The method of phase separation by temperature variation lends itself to fairly straightforward industrialisation, provided that temperature-controlled surface production systems and temperature-controlled PEG/Acetone solution dispensers are available (typically belt machines for continuous processes similar to those used for paper or plastic sheets).

Figures 8A-8B show the whitish and porous structure of the PEG6000 resulting from the evaporation of the acetone compared with the structure of the cardboard containing fibres of various sizes and colours mixed with residues coming from the recycling process of the paper itself.

The process is summarised in Figure 9. As mentioned above, the paper substrate is brought to a temperature of 23°C (Figure 9A) and a solution of PEG6000 in acetone at 20% by weight is deposited on it and kept in agitation at a temperature of 40 °C (Figure 9B).

At this point, the solution cools quickly reaching the temperature of the substrate and the PEG begins to precipitate while the acetone evaporates from the surface of the deposited droplet (Figure 9C).

Some of the acetone permeates the substrate but most of it leaves the upper layer, giving the surface its characteristic granular appearance with many gaps between one grain and another (Figure 9D).

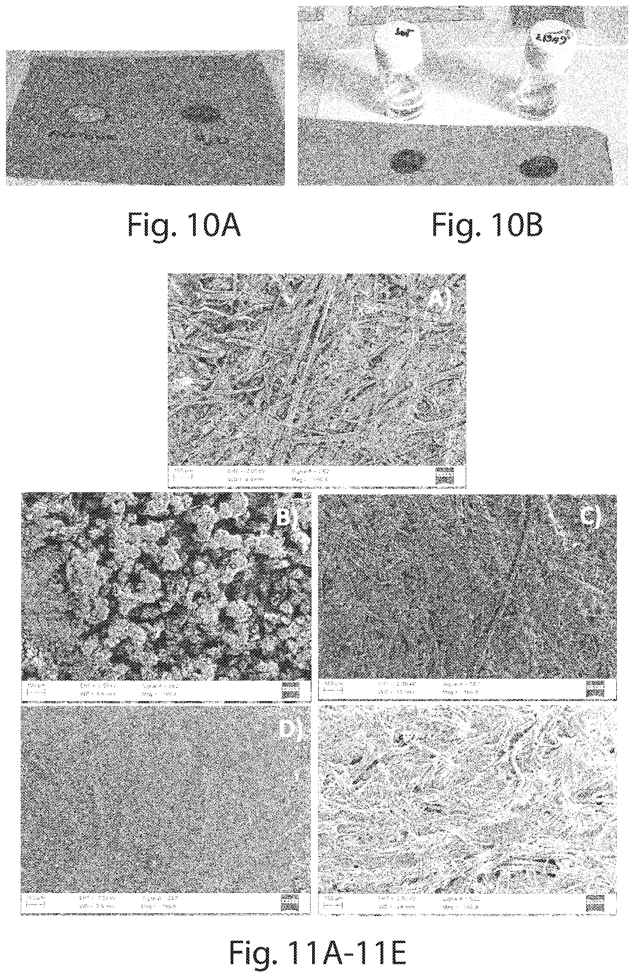

As can be seen from Figures 10A-10B, under the same preparation conditions (concentration, solution temperature, substrate temperature), the preparation of PEG6000 solutions in other solvents (for example, water, toluene, chloroform, etc.) does not produce two separate layers but a single layer of paper soaked with PEG6000 (Figures 11C-11E).

In fact, as can be seen from Figure 11B, studies by SEM electron microscopy show that the PEG6000+acetone solution at a concentration of 20% by weight is the only one, among the tests carried out, that allows PEG to be deposited from the liquid phase without completely incorporating the cardboard with PEG6000.

By way of example, the deposition experiments have been successfully repeated on other types of paper, but the choice of a rough, thick card enables the PEG layer to be better and more completely absorbed during melting.

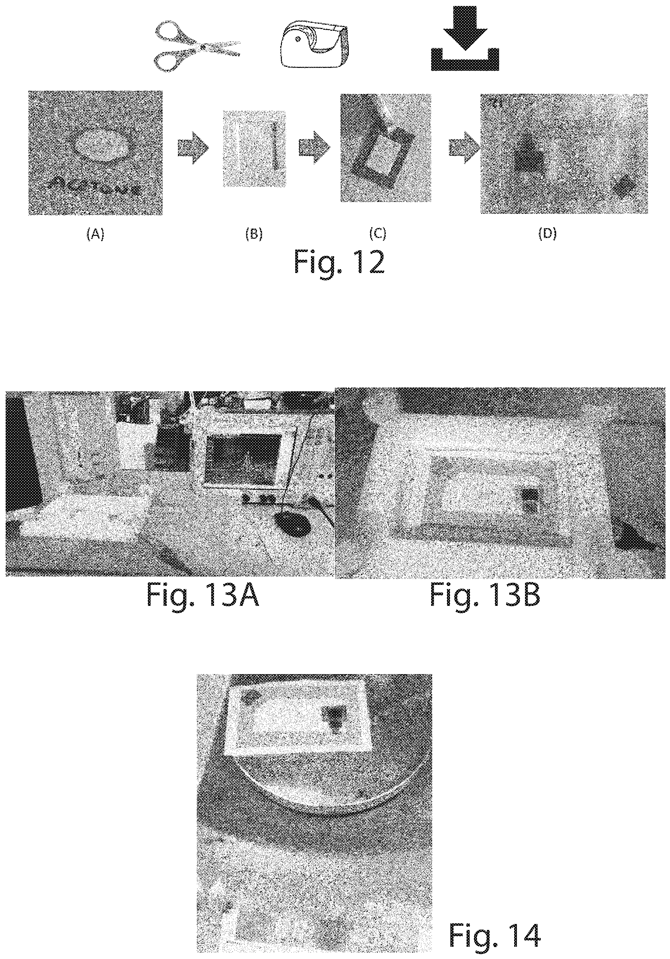

Figure 12 shows the process steps carried out in the laboratory to apply the double dielectric layer to the RFID tag 1.

The process of making said temperature detection means 11 involves four main steps: A) depositing the double layer; B) cutting the active surface; C) applying a protective/adhesive layer; D) applying the double layer by pressing.

In more detail, after drying the double layer to a temperature of 23 °C in air (Figure 12A), a rectangular shape of 8 mm × 12 mm (Figure 12B) is cut from the paper substrate in such a way as to include the active area of the interdigitated capacitor (IDC). The cut, which in the laboratory was performed with simple scissors, could instead be industrially carried out by means of dies mounted on a roller in order to subsequently transfer the double layer onto an adhesive film (Figure 12C) to be pressed against the armatures of the interdigitated capacitor itself (Figure 12D).

More specifically, the RFID transponder 1 in Figure 12D was made on a substrate made of ordinary wrapping paper and, for simplicity, the bridge 13 was applied manually by connecting a 0.2 mm diameter fluoropolymer insulated aluminium conductor with silver paste to the antenna pads.

In general, the entire process could be designed to work on a continuous belt, as both the printing process, the die-cutting process and the application of the chip and the double layer are already prepared for this type of industrial production.

With particular reference to Figures 13A-13B, after manufacture of the RFID tag 1, the latter has been characterised through a Keysight ENA5061B vector network analyser (VNA) connected to a standard wire-loop antenna ([9]).

After recording the impedance spectrum $Z(f) = R(f) +jX(f)$ in partly real and imaginary form, the same RFID transponder 1 is brought above the melting temperature of PEG6000 on a hot plate for 60 seconds as shown in Figure 14.

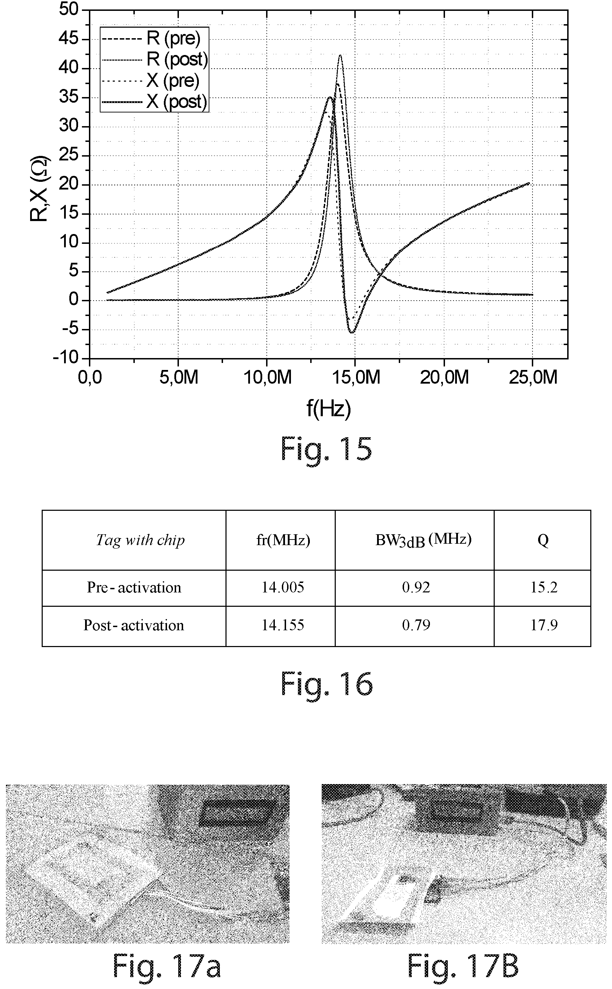

After being subjected to a temperature of greater than 60°C, the PEG6000 on the surface of the card melts and completely permeates the card itself, so the silver paste armatures of the capacitor will come into contact with the card, causing a variation in capacitance and therefore in the resonance frequency of the RFID 1 tag, as can be seen in Figure 15.

In particular, Figure 15 compares the impedance spectrum of the RFID tag 1 before (in black) and after (in red) exceeding the thermal threshold, but after cooling of the substrate.

The results of the measurements are summarised in the table in Figure 16, where fr is the resonance frequency of the RFID 1 tag evaluated from the real part of the impedance, BW is the 3dB bandwidth evaluated on the same quantity, and Q is the quality factor.

Under the assumptions already stated above, the total variation in capacity can be calculated to be approximately -2.025 pF. This is consistent with the assumption that the configuration with a paper dielectric soaked with PEG6000 has a lower average dielectric constant than that resulting from the double-layer dielectric.

In conclusion, the activation of said temperature detection means 11 causes a reduction in total capacity, and the percentage variation in resonance frequency is estimated at 1.07%.

Figures 17A, 17B, depict a prior art RFID reader based on commercial NXP MFRC522 chip [42] which correctly acquires the UID (of 4 bytes on the display) of the RFID transponder 1 prototype without said temperature detection means 11 (Figure 17A) and equipped with said temperature detection means 11.

Experimental tests show, therefore, that the connectivity between the chip (type MIFARE S50) is maintained both for RFID 1 tags with dielectric-free armatures and after the application of the double layer and its activation.

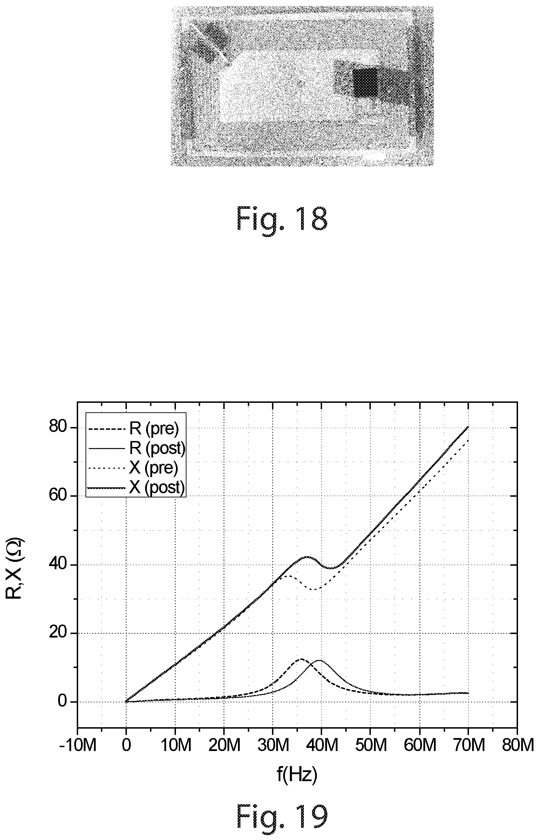

In a further embodiment, identical experiments (except acquisition with a commercial reader) were carried out on a chipless RFID tag 1 made on photographic paper. This chipless RFID 1 tag is shown in Figure 18.

The opportunity to use *chipless* RFID 1 tags is particularly interesting as it allows the manufacturing costs and complexity to be reduced in all those applications where it is not necessary to use unique object identification or to work with the digital memory of the chip, but where only sensory data are required.

Figure 19 shows the comparison of the impedance spectra of the *chipless* RFID 1 tag before and after thermal activation of said temperature detection means 11.

In particular, Figure 19 shows that the resonance frequency of the RFID tag 1, with the same antenna and temperature detection means 11 is between 30 and 40 MHz, so a correct application of the reader [16] will require a modification to the geometry of the RFID tag 1 to introduce a "ballast" capacitor which is able to bring this frequency below 30 MHz and thus make the fr variations acquirable through the physical reader [16].

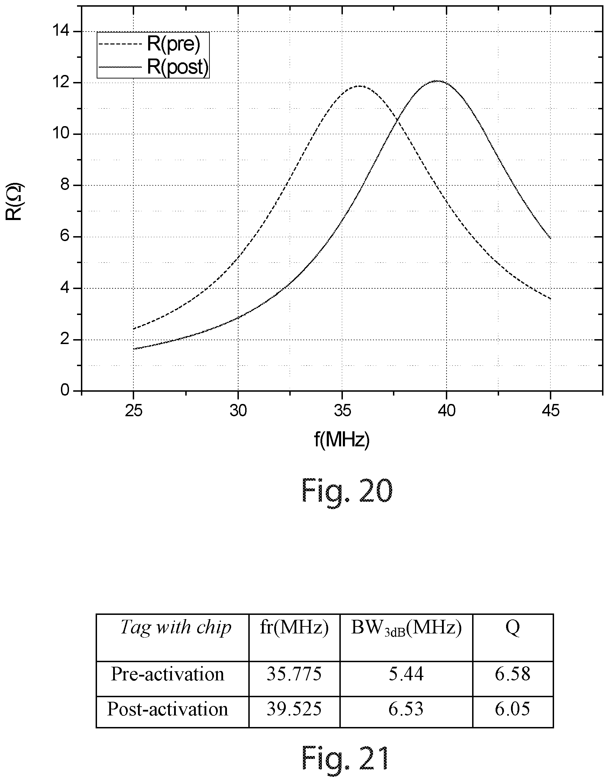

For better readability, Figure 20 shows a more detailed scan of the spectrum of the real part of the impedance, allowing the essential parameters to be extracted in the same way as for the RFID tag 1 with chip. The relevant parameters are taken from Figure 20 and summarised in the table in Figure 21.

With a reasoning similar to tat for the RFID tag 1 with chip we can estimate the total load capacity for the RFID tag 1 from the Thomson relation, Ctot(initial) = 3.5342 pF which reduces to 2.8954 pF after activation.

It is evident that the variation in capacity of the RFID 1 tag is not constant at all frequencies, since in this case we observe a load reduction of about 0.639 pF. The percentage variation in resonance frequency in this case is 10% of the initial value.

This shows that potentially said temperature detection means 11 integrated into chipless RFID tags 1 lead to higher sensitivity than said temperature detection means 11 integrated into RFID tags 1 with chip.

The above, under the unconfirmed hypothesis of equal capacity variation at all frequencies, could be explained as follows.

Where $f_{rvar}$ is the relative variation in resonant frequency of a passive HF RFID tag 1 understood to be a resonant RLC circuit. It will be defined as follows:

$$f_{rvar} \equiv \frac{\Delta f_r}{f_{r0}} = \frac{f_r^{after\ heating} - f_{r0}}{f_{r0}}$$

where $f_{r0}$ is the resonance frequency of the RFID tag 1 before thermal activation and $f_r^{after\ heating}$ is its value after the thermal threshold has been crossed.

From the Thomson relationship, neglecting parasitic effects and resistivity of the antenna, the resonant frequency can be expressed as follows:

$$f_r = \frac{1}{2\pi \sqrt{L_{ant}\left(C_{chip} + C_{sub} + C_{sens0} + \Delta C_{sens}\right)}}$$

where

$C_{chip}$ is the capacity of the chip,
$C_{sub}$ is the resultant of the parasitic capacitance of the antenna 10 towards the substrate S and towards the bridge 13,
$C_{sens0}$ is the capacity of said temperature detection means 11 before the thermal activation, and
$\Delta C_{sens}$ is the variation in capacity of said temperature detection means 11 due to the exceeding of the thermal threshold.

From the two previous equations, the relative variation $f_{rvar}$ can be derived as follows:

$$f_{rvar} \equiv \frac{\Delta f_r}{f_{r0}} = \cdots = \sqrt{\frac{1}{1 + \dfrac{\Delta C_{sens}}{C_{chip} + C_{sub} + C_{sens0}}} - 1}$$

By way of example, if this equation is simulated for values of the quiescent capacitance ($C_0 = C_{chip} + C_{sub} + C_{sens0}$) between 0.1 pF and 30 pF, it can be seen that variations in sensor capacitance ($\Delta C_{sens}$) result in variations in resonant frequency $f_{rvar}$, and that $f_{rvar}$ always decreases with the same $\Delta C_{sens}$ as the quiescent capacitance $C_0$ increases.

Therefore, we can conclude that, at least from a theoretical point of view, for more robust detections, it is worth minimising the load capacity for the RFID tag 1.

In the light of the above, the measures taken are aimed at making the device more compact and easier to manufacture as well as suitable for continuous belt processes such as the printing of materials and solution processes.

In fact, the reserve of material, its final destination, the substrate and the device are arranged on top of each other and stacked, compactly occupying the same area and avoiding the presence of material in a "free" liquid state, that is, not embedded in an absorbent fabric, eliminating the need for complex and expensive microfluidic structures. More specifically, when the material is in a solid state, it does not permeate the substrate on which it is deposited or the substrate on which the antenna is formed. Conversely, when the sensitive material liquefies, it is rapidly incorporated by capillarity into the absorbent substrate.

**Advantages**

A first advantage of the RFID transponder according to the present invention is to be able to detect variations of the temperature indicator even in the absence of a chip.

A further advantage of the RFID transponder according to the present invention is that it is space-saving, inexpensive, and easily integrated into RFID systems capable of detecting physical parameters.

Another advantage of the RFID transponder according to the present invention is to avoid interference in the communication with the reader due to the reading of unique identifiers or the memory content of the chip in the presence of said temperature detection means.

A further advantage of the RFID transponder according to the present invention is that it is capable of operating without a battery.

Another advantage of the RFID transponder according to the present invention is to avoid active power dissipation by using dielectric materials as well as to avoid comparing signal spectrum strength measurements at resonance peaks at the same frequencies. In fact, these measurements are difficult to compare for a label where the signal strength depends on the reader-tag distance.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

**References**

[1] "Melexis MLX90129 13.56MHZ SENSOR TAG / DATALOGGER IC" data sheet, http://www.melexis.com/Assets/Data-Sheet-MLX90129-5941.aspx;

[2] P. Pursula, J. Marjonen, H. Ronkainen and K. Jaakkola, 'Wirelessly Powered Sensor Transponder For UHF RFID', proc. Int. conf. TRANSDUCERS & EUROSENSORS '07, (The 14th International Conference on Solid-State Sensors, Actuators and Microsystems, Lyon, France, June 10-14, 2007), pp. 73-36;

[3] Riad Kanan, Darko Petrovic, "A SMART RFID Transponder", ICWMC 2012: The Eighth International Conference on Wireless and Mobile Communications, Copyright (c) IARIA, 2012. ISBN: 978-1-61208-203-5, pp. 36-41;

[4] M. Skoczylas, K. Kamuda, P. Jankowski-Mihutowicz, W. Kalita, M. Węglarski, "Autonomous sensor-transponder RFID with supply energy conditioning for object navigation systems", 13th International Scientific Conference on Optical Sensors and Electronic Sensors, Proc. of SPIE Vol. 9291 929100-1;

[5] Sajal, S.; Atanasov, Y.; Braaten, B.D.; Marinov, V.; Swenson, O., "A low cost flexible passive UHF RFID tag for sensing moisture based on antenna polarization," in Electro/Information Technology (EIT), 2014 IEEE International Conference on , vol., no., pp.542-545, 5-7 June 2014 doi: 10.1109/EIT.2014.6871822;

[6] "Characterization of HF RFID Tags Exposed to Moisture Based on Threshold Power Measurement", Toni Bjorninen, Jukka Voutilainen, Lauri Sydanheimo, and Leena Ukkonen, PIERS Proceedings, 815 - 818, August 12-15, Stockholm, 2013;

[7] Azzarelli, Joseph M., Katherine A. Mirica, Jens B. Ravnsbaek, and Timothy M. Swager. "Wireless Gas Detection with a Smartphone via Rf Communication." Proceedings of the National Academy of Sciences 111, no. 51 (December 8, 2014): 18162-18166;

[8] Danev, B., Zanetti, D., and Capkun, S. 2011. On physical-layer identification of wireless devices. ACM Comput.

Surv. 45, 1, Article 6 (November 2012), 29 pages. DOI = 10.1145/2379776.2379782 http://doi.acm.org/10.1145/2379776.2379782;

[9] ISO/IEC 10373-7:2008, Identification cards -- Test methods -- Part 7: Vicinity cards, http://www.iso.org/iso/iso_catalogue/catalogue_tc/catalogue_detail.htm?cs number=50030;

[10] AN2866 Application note, "How to design a 13.56 MHz customized tag antenna", http://www.st.com/st-web-ui/static/active/cn/resource/technical/document/application_note/CD00221 490.pdf;

[11] AN2972 Application note, "Designing an antenna for the M24LRxx-R and M24LRxxE-R dual interface I2C/RFID devices", http://www.st.com/web/en/resource/technical/document/application_note/C D00232630.pdf;

[12] US20150116093A1 "Chemical and physical sensing with a reader and RFID tags" (30/Apr/2015) di Swager, Azzarelli et al.;

[13] US20130099897A1 ("RFID-based devices and methods for interfacing with a sensor" di Ian J. Forster et al.;

[14] US20120182147A1 ("Sensing properties of a material loading a UHF RFID tag by analysis of the complex reflection backscatter at different frequencies and power levels" di Ian J. Forster et al.);

[15] JP2011028424 (A) ("RFID TAG WITH SENSOR FUNCTION, AND RFID SYSTEM USING THE SAME" di ITO SHIGEO et al.);

[16] R. Miscioscia, A. Citarella, F. Pascarella, G. Pandolfi, F. Loffredo, F. Villani, T. Fasolino, L. Quercia, C. Minarini "Dispositivo e Sistema di Misura", ENEA patent N. 837, Italian application N. 102016000079657;

[17] US_2016328584_A1, US2016328584A1, RADIO FREQUENCY IDENTIFICATION (RFID) TAG(S) and SENSOR(S), di COOKE BENJAMIN [US]; HASSOUN MARWAN [US]; MISRA ABHAY [US]; PAULOS JOHN J [US]; ROKHSAZ SHAHRIAR [US]; YOUNG BRIAN DAVID [US]; YOUNIS AHMED [US] (PFMICRON INC [US]).

[18] OTLES, S. and YALCIN, B., 2008: Intelligent food packaging. Log Forum 4, 4, 3. URL: http://www.logforum.net/vol4/issue4/no3;

[19] "Commission Regulation (EC) No 450/2009 of 29 May 2009 on active and intelligent materials and articles intended to come into contact with food (Text with EEA relevance)" OJ L 135, 30.5.2009, p. 3-11 (http://data.europa.eu/eli/reg/2009/450/oj);

[20] R. Miscioscia, C. Borriello, G. Pandolfi, G. De Filippo, T. Fasolino, B. Lanza, G. Zappa and C. Minarini, "Application of Polyvinylidene Fluoride interdigital capacitors as parasitic temperature-sensing loads in passive HF RFID transponders," to be published in Proc. Of XX AISEM Annual conference 11-13 February 2019;

[21] TAOUKIS, P. S. and LABUZA, T. P., 1989: Applicability of time-temperature indicators as shelf life monitors of food products. Journal of Food Sciences, Vol. 54, p. 783-788. ISSN 1750-3841;

[22] Shaodong Wang, Xinghai Liu, Mei Yang, Yu Zhang, Keyu Xiang and Rong Tang, "Review of Time Temperature Indicators as Quality Monitors in Food Packaging," Packag. Technol. Sci. 2015; 28: 839-867;

[23] TAOUKIS, P. and LABUZA, T. P., 2003: Time temperature indicators (TTIs). In: Ahvenainen, R. (ed.), Novel food packaging techniques. Cambridge, UK: Woodhead Publishing Ltd., 590 p. ISBN 978-0849317897;

[24] CN103543146A, "Electronic tag combining time-temperature indicator and radio frequency identification"(https://patents.google.com/patent/CN103543146A/en?oq=C N103543146) application filed 2013-09-12;

[25] EP2523147A1, Gary Pope, Therese Myers, Stanton Kaye, Jonathan Burchell, "Shelf-Life Monitoring Sensor-Transponder System", application filed 25.04.2005, (https://patents.google.com/patent/EP2523147A1/en?oq=E P2523147A1);

[26] CN103593746A, "Cold-chain logistics management device with shelf life prediction function, method thereof and application thereof", application filed 2013-10-24 (https://patents.google.com/patent/CN 103593746A/en?oq=CN 103593746 A+);

[27] US20160328584A1, "Radio Frequency Identification (RFID) Tag(s) And Sensor(s)", Shahriar Rokhsaz, Brian David Young, Ahmed Younis, John J. Paulos, Abhay Misra, Benjamin Cooke, Marwan Hassoun, application filed 29-09-2015 (RFMicron Inc.)

[28] WO2016060938A2, Hassoun Marwan, Rokhsaz Shahriar, Young Brian, "Radio Frequency Identification (RFID) Moisture Tag(s) And Sensors With Extended Sensing Via Capillaries", application filed: 08.10.2015;

[28] ISO/IEC 18000-6:2013 "Information technology -- Radio frequency identification for item management -- Part 6: Parameters for air interface communications at 860 MHz to 960 MHz General", (https://www.iso.org/standard/59644.html);

[29] AND9209/D, "Chameleon Technology Enables Low-Cost Battery Free Wireless Sensors", On Semiconductor,(https://www.onsemi.com/pub/Collateral/AND9209-D.PDF);

[30] "Chameleon™ Sensor Engine", http://rfmicron.com/technology/chameleon/;

[31] "SMARTRAC, RFMicron Release Passive RFID Temperature Sensor Technology" http://www.rfidjournal.com/articles/view?14487;

[32] "Smart Passive Sensors for Automotive Applications", http://rfmicron.com/automotive/;

[33] "Health Care and Incontinence Management" - http://rfmicron.com/health-care/;

[34] "Smart Passive Sensors for Industrial Applications" - http://rfmicron.com/industrial/;

[35] ISO/IEC 14443-2:2016, "Identification cards -- Contactless integrated circuit cards -- Proximity cards -- Part 2: Radio frequency power and signal interface";

[36] NXP product datasheet 279232 "MF1S50YYX_V1 MIFARE Classic EV1 1K - Mainstream contactless smart card IC for fast and easy solution development Rev. 3.2 - 23 May 2018" https://www.nxp.com/docs/en/data-sheet/MF1S50YYX_V1.pdf;

[37] A. S. Abu-Abed and R. G. Lindquist "Capacitive Interdigital Sensor with Inhomogeneous Nematic Liquid Crystal Film" Progress In Electromagnetics Research B, Vol. 7, 75-87, 2008;

[38] R. Igreja, C.J. Dias, "Analytical evaluation of the interdigital electrodes capacitance for a multi-layered structure", Sensors and Actuators A 112 (2004) 291-301;

[39] Sheng Zhang, "Interdigitated Capacitor Sensor for Complex Dielectric Constant Sensing", Master Of Science In Engineering Thesis, The University Of Texas At Austin, http://hdl.handle.net/2152/ETD-UT-2010-05-1142;

[40] (2012). Polyethylene glycol [MAK Value Documentation, 1998]. In The MAK-Collection for Occupational Health and Safety (eds and ). doi: 10.1002/3527600418.mb2532268kske0010;

[41] C. Özdemir, A. Guner / European Polymer Journal 43 (2007) 3068-3093, Dow Chemical Company, 2002, Product brochure form no. 326-00001-0302 AMS;

[42] "MFRC522, Standard performance MIFARE and NTAG frontend", Rev. 3.9 - 27 April 2016, 112139, Product data sheet, NXP, https://www.nxp.com/docs/en/data-sheet/MFRC522.pdf.

## Claims

1. An RFID transponder (1) comprising detection means (11) of the exceeding of a threshold temperature,

   wherein said RFID transponder (1) comprises a dielectric substrate (S), and an antenna (10) arranged on said dielectric substrate (S), and

   wherein said detection means (11) are arranged on said dielectric substrate (S) and comprise an interdigitated capacitor, said antenna (10) being electrically and physically interfaced with armatures of said interdigitated capacitor,

   said RFID transponder (1) being **characterised in that** said detection means (11) comprise a multilayer dielectric structure (D) arranged on said dielectric substrate (S), and a protective layer (A) which contacts said multilayer dielectric structure (D), covering and applying a pressure on said multilayer dielectric structure (D), in the direction of said dielectric substrate (S),

   wherein

   said multilayer dielectric structure (D) comprises a first dielectric layer (D1) which contacts said dielectric substrate (S), and a second dielectric layer (D2) arranged on said first dielectric layer (D1) and separated from said dielectric substrate (S),

   wherein said first dielectric layer (D1) comprises a material which is conformable by pressure and has a melting temperature equal to said threshold temperature, and

   wherein said second dielectric layer (D2) comprises permeable means capable of absorbing by capillarity said material of said first dielectric layer (D1), in the molten state, and

   **in that** said armatures of said interdigitated capacitor comprise two interdigitated electrodes (E1, E2) to form a capacitive transducer, arranged on said dielectric substrate (S), wherein said material of said first dielectric layer (D1) contacts said two electrodes (E1, E2) and said permeable means are separated from said material of said first dielectric layer (D1) and from said interdigitated electrodes (E1, E2), when said dielectric substrate (S) is not heated to temperatures greater than said melting temperature of said material of said first dielectric layer (D1), and wherein, when said dielectric substrate (S) is heated to temperatures greater than said melting temperature of said material of said first dielectric layer (D1), said material melts and permeates by capillarity said permeable means, varying the resulting average dielectric permittivity of said multilayer dielectric structure (D) and consequently the electrical impedance of the interdigitated capacitor having as the armatures the electrodes (E1, E2).

2. RFID transponder (1) according to the preceding claim, **characterised in that** said material of said first dielectric layer (D1) is polyethylene glycol (PEG).

3. RFID transponder (1) according to any one of the preceding claims, **characterised in that** said dielectric substrate (S) is made from a layer of impermeable plastic material.

**4.** RFID transponder (1) according to any one of the preceding claims, **characterised in that** said protective layer (A) is an adhesive layer capable of fixing together said first dielectric layer (D1), said dielectric substrate (S), said two electrodes (E1, E2) and said second dielectric layer (D2), preventing detachment of said first dielectric layer (D1) from said dielectric substrate (S).

**5.** RFID transponder (1) according to claim 1, **characterised**

**in that** said material of said first dielectric layer (D1) is polyethylene glycol (PEG),
**in that** said dielectric substrate (S) is made from a layer of impermeable plastic material, and
**in that** said protective layer (A) is an adhesive layer capable of fixing together said first dielectric layer (D1), said dielectric substrate (S), said two electrodes (E1, E2) and said second dielectric layer (D2), preventing detachment of said first dielectric layer (D1) from said dielectric substrate (S).

**6.** Method for making an RFID transponder (1) comprising detection means (11) of the exceeding of a threshold temperature according to any one of claims 1 to 5, wherein said method comprises the following steps:

A. providing a dielectric substrate (S) and said interdigitated electrodes (E1, E2) arranged on said dielectric substrate (S);
B. making said multilayer dielectric structure (D);
C. cutting a portion of said multilayer dielectric structure (D);
D. applying said protective layer (A) to said multilayer dielectric structure (D), obtaining an additional layer;
E. pressing said additional layer on said interdigitated electrodes (E1, E2).

**7.** Method according to the preceding claim, **characterised in that** said multilayer dielectric structure (D) comprises a first dielectric layer (D1), and a second dielectric layer (D2) arranged on said first dielectric layer (D1) and separated from said dielectric substrate (S),

wherein said first dielectric layer (D1) comprises a material which is conformable by pressure and has a respective melting temperature equal to said threshold temperature, and
wherein said second dielectric layer (D2) comprises permeable means capable of absorbing by capillarity said material of said first dielectric layer (D1).

**8.** Method according to any one of claims 6 or 7, **characterised in that** said step B comprises the following sub-steps:

B1. dissolving said material of said first dielectric layer (D1) in acetone at a concentration by weight of 20% obtaining a solution, and keeping said solution in agitation at a constant temperature of 40°C;
B2. keeping said permeable means at a constant temperature of 23°C by means of a Peltier cell system or the like;
B3. depositing said solution obtained in said sub-step A1 on said permeable means by a drop-casting technique or other compatible additive technique;
B4. cooling said permeable means to a predetermined temperature, in such a way that said acetone evaporates and said material of said first dielectric layer (D1) precipitates and deposits on said permeable means.

**9.** Method according to any one of claims 6 to 8, **characterised in that** the said protective layer (A) is an adhesive layer capable of covering said multilayer dielectric structure (D).

**10.** Method according to claim 6, **characterised**

**in that** said multilayer dielectric structure (D) comprises a first dielectric layer (D1), and a second dielectric layer (D2) arranged on said first dielectric layer (D1) and separated from said dielectric substrate (S),
wherein said first dielectric layer (D1) comprises a material which is conformable by pressure and has a respective melting temperature equal to said threshold temperature, and
wherein said second dielectric layer (D2) comprises permeable media capable of absorbing by capillarity said material of said first dielectric layer (D1),
**in that** said step B comprises the following sub-steps:

B1. dissolving said material of said first dielectric layer (D1) in acetone at a concentration by weight of 20% obtaining a solution, and keeping said solution in agitation at a constant temperature of 40°C;
B2. keeping said permeable means at a constant temperature of 23°C by means of a Peltier cell system or the like;

B3. depositing said solution obtained in said sub-step A1 on said permeable means by a drop-casting technique or other compatible additive technique;

B4. cooling said permeable means to a predetermined temperature, in such a way that said acetone evaporates and said material of said first dielectric layer (D1) precipitates and deposits on said permeable means, and

**in that** the said protective layer (A) is an adhesive layer capable of covering said multilayer dielectric structure (D).

## Patentansprüche

1. RFID-Transponder (1), der Mittel (11) zum Erkennen des Überschreitens einer Schwellentemperatur umfasst, wobei der RFID-Transponder (1) ein dielektrisches Substrat (S) und eine Antenne (10) umfasst, die auf dem dielektrischen Substrat (S) angeordnet ist, und wobei die Erfassungsmittel (11) auf dem dielektrischen Substrat (S) angeordnet sind und einen ineinandergreifenden Kondensator umfassen, wobei die Antenne (10) elektrisch und physikalisch mit Ankern des ineinandergreifenden Kondensators verbunden ist, der RFID-Transponder (1) ist **gekennzeichnet durch** dass die Erfassungsmittel (11) eine mehrschichtige dielektrische Struktur (D), die auf dem dielektrischen Substrat (S) angeordnet ist, und eine Schutzschicht (A) umfassen, die die mehrschichtige dielektrische Struktur (D) berührt, die mehrschichtige dielektrische Struktur (D) bedeckt und in Richtung des dielektrischen Substrats (S) einen Druck auf sie ausübt, wobei die mehrschichtige dielektrische Struktur (D) eine erste dielektrische Schicht (D1), die das dielektrische Substrat (S) kontaktiert, und eine zweite dielektrische Schicht (D2) umfasst, die auf der ersten dielektrischen Schicht (D1) angeordnet und von dem dielektrischen Substrat (S) getrennt ist, wobei die erste dielektrische Schicht (D1) ein Material umfasst, das **durch** Druck anpassungsfähig ist und eine Schmelztemperatur aufweist, die gleich der genannten Schwellentemperatur ist, und wobei die zweite dielektrische Schicht (D2) durchlässige Mittel umfasst, die in der Lage sind, das Material der ersten dielektrischen Schicht (D1) im geschmolzenen Zustand durch Kapillarität zu absorbieren, und dass die Armaturen des ineinandergreifenden Kondensators zwei ineinandergreifende Elektroden (E1, E2) umfassen, um einen kapazitiven Wandler zu bilden, der auf dem dielektrischen Substrat (S) angeordnet ist, wobei das Material der ersten dielektrischen Schicht (D1) die beiden Elektroden (E1, E2) kontaktiert und die permeablen Mittel von dem Material der ersten dielektrischen Schicht (D1) und von den ineinandergreifenden Elektroden (E1, E2) getrennt sind, wenn das dielektrische Substrat (S) nicht auf Temperaturen erhitzt wird, die höher sind als die Schmelztemperatur des Materials der ersten dielektrischen Schicht (D1), und bei dem, wenn das dielektrische Substrat (S) auf Temperaturen erwärmt wird, die höher sind als die Schmelztemperatur des Materials der ersten dielektrischen Schicht (D1), das Material schmilzt und **durch** Kapillarität die permeablen Mittel durchdringt, wodurch die resultierende durchschnittliche dielektrische Permittivität der mehrschichtigen dielektrischen Struktur (D) und folglich die elektrische Impedanz des ineinandergreifenden Kondensators, der als Anker die Elektroden (E1, E2) hat, verändert wird.

2. RFID-Transponder (1) nach dem vorhergehenden Anspruch, **dadurch gekennzeichnet, dass** das Material der ersten dielektrischen Schicht (D1) Polyethylenglykol (PEG) ist.

3. RFID-Transponder (1) nach einem der vorhergehenden Ansprüche, **dadurch gekennzeichnet, dass** das dielektrische Substrat (S) aus einer Schicht aus undurchlässigem Kunststoffmaterial hergestellt ist.

4. RFID-Transponder (1) nach einem der vorhergehenden Ansprüche, **dadurch gekennzeichnet, dass** die Schutzschicht (A) eine Klebeschicht ist, die in der Lage ist, die erste dielektrische Schicht (D1), das dielektrische Substrat (S), die beiden Elektroden (E1, E2) und die zweite dielektrische Schicht (D2) miteinander zu verbinden, wodurch ein Ablösen der ersten dielektrischen Schicht (D1) von dem dielektrischen Substrat (S) verhindert wird.

5. RFID-Transponder (1) nach Anspruch 1, **dadurch gekennzeichnet, dass** das Material der ersten dielektrischen Schicht (D1) Polyethylenglykol (PEG) ist, dass das dielektrische Substrat (S) aus einer Schicht aus undurchlässigem Kunststoff hergestellt ist, und dass die Schutzschicht (A) eine Klebeschicht ist, die in der Lage ist, die erste dielektrische Schicht (D1), das dielektrische Substrat (S), die beiden Elektroden (E1, E2) und die zweite dielektrische Schicht (D2) miteinander zu verbinden und eine Ablösung der ersten dielektrischen Schicht (D1) von dem dielektrischen Substrat (S) zu verhindern.

6. Verfahren zur Herstellung eines RFID-Transponders (1) mit einer Einrichtung (11) zur Erfassung des Überschreitens einer Schwellentemperatur nach einem der Ansprüche 1 bis 5, wobei das Verfahren die folgenden Schritte umfasst:

A. Bereitstellen eines dielektrischen Substrats (S) und der ineinandergreifenden Elektroden (E1, E2), die auf dem dielektrischen Substrat (S) angeordnet sind;

B. die Herstellung der mehrschichtigen dielektrischen Struktur (D);

C. Schneiden eines Teils der genannten mehrschichtigen dielektrischen Struktur (D);

D. Aufbringen der Schutzschicht (A) auf die mehrschichtige dielektrische Struktur (D), um eine zusätzliche Schicht zu erhalten;

E. Pressen der zusätzlichen Schicht auf die ineinandergreifenden Elektroden (E1, E2).

7. Verfahren nach dem vorhergehenden Anspruch, **dadurch gekennzeichnet, dass** die mehrschichtige dielektrische Struktur (D) eine erste dielektrische Schicht (D1) und eine zweite dielektrische Schicht (D2) umfasst, die auf der ersten dielektrischen Schicht (D1) angeordnet und von dem dielektrischen Substrat (S) getrennt ist, wobei die erste dielektrische Schicht (D1) ein Material umfasst, das durch Druck anpassungsfähig ist und eine entsprechende Schmelztemperatur aufweist, die gleich der genannten Schwellentemperatur ist, und wobei die zweite dielektrische Schicht (D2) durchlässige Mittel umfasst, die in der Lage sind, durch Kapillarität das Material der ersten dielektrischen Schicht (D1) zu absorbieren.

8. Verfahren nach einem der Ansprüche 6 oder 7, **dadurch gekennzeichnet, dass** der Schritt B die folgenden Unterschritte umfasst:

B1. Auflösen des Materials der ersten dielektrischen Schicht (D1) in Aceton mit einer Gewichtskonzentration von 20%, um eine Lösung zu erhalten, und Halten der Lösung unter Rühren bei einer konstanten Temperatur von 40°C;

B2. Halten des durchlässigen Mittels auf einer konstanten Temperatur von 23°C mit Hilfe eines Peltier-Zellensystems oder ähnlichem;

B3. Aufbringen der im Unterschritt A1 erhaltenen Lösung auf das durchlässige Mittel durch ein Tropfengußverfahren oder ein anderes kompatibles Additivverfahren;

B4. Abkühlen der durchlässigen Einrichtung auf eine vorbestimmte Temperatur, so dass das Aceton verdampft und das Material der ersten dielektrischen Schicht (D1) ausfällt und sich auf der durchlässigen Einrichtung ablagert.

9. Verfahren nach einem der Ansprüche 6 bis 8, **dadurch gekennzeichnet, dass** die Schutzschicht (A) eine Klebeschicht ist, die die mehrschichtige dielektrische Struktur (D) abdecken kann.

10. Verfahren nach Anspruch 6, **dadurch gekennzeichnet dass** die mehrschichtige dielektrische Struktur (D) eine erste dielektrische Schicht (D1) und eine zweite dielektrische Schicht (D2) umfasst, die auf der ersten dielektrischen Schicht (D1) angeordnet und von dem dielektrischen Substrat (S) getrennt ist, wobei die erste dielektrische Schicht (D1) ein Material umfasst, das durch Druck anpassungsfähig ist und eine entsprechende Schmelztemperatur aufweist, die gleich der genannten Schwellentemperatur ist, und wobei die zweite dielektrische Schicht (D2) durchlässige Medien umfasst, die in der Lage sind, das Material der ersten dielektrischen Schicht (D1) durch Kapillarität zu absorbieren, dass der Schritt B die folgenden Unterschritte umfasst:

B1. Auflösen des Materials der ersten dielektrischen Schicht (D1) in Aceton mit einer Gewichtskonzentration von 20%, um eine Lösung zu erhalten, und Halten der Lösung unter Rühren bei einer konstanten Temperatur von 40°C;

B2. Halten des durchlässigen Mittels auf einer konstanten Temperatur von 23°C mit Hilfe eines Peltier-Zellensystems oder ähnlichem;

B3. Aufbringen der im Unterschritt A1 erhaltenen Lösung auf das durchlässige Mittel durch ein Tropfengußverfahren oder ein anderes kompatibles Additivverfahren;

B4. Abkühlen der durchlässigen Einrichtung auf eine vorbestimmte Temperatur, so dass das Aceton verdampft und das Material der ersten dielektrischen Schicht (D1) ausfällt und sich auf der durchlässigen Einrichtung absetzt, und dass die Schutzschicht (A) eine Klebeschicht ist, die die mehrschichtige dielektrische Struktur (D) abdecken kann.

**Revendications**

1. Transpondeur RFID (1) comprenant des moyens de détection (11) du dépassement d'une température seuil, dans lequel ledit transpondeur RFID (1) comprend un substrat diélectrique (S) et une antenne (10) disposée sur ledit substrat diélectrique (S), et dans lequel lesdits moyens de détection (11) sont disposés sur ledit substrat diélectrique (S) et comprennent un condensateur interdigité, ladite antenne (10) étant électriquement et physiquement interfacée avec les armatures dudit condensateur interdigité, ledit transpondeur RFID (1) est **caractérisé par** en ce que lesdits moyens de détection (11) comprennent une structure diélectrique multicouche (D) disposée sur ledit substrat diélectrique (S), et une couche de protection (A) qui entre en contact avec ladite structure diélectrique multicouche (D), recouvrant et appliquant une pression sur ladite structure diélectrique multicouche (D), dans la direction dudit substrat diélectrique (S), dans lequel ladite structure diélectrique multicouche (D) comprend une première couche diélectrique (D1) en contact avec ledit substrat diélectrique (S), et une seconde couche diélectrique (D2) disposée sur ladite première couche diélectrique (D1) et séparée dudit substrat diélectrique (S), dans laquelle ladite première couche diélectrique (D1) comprend un matériau conformable par pression et dont la température de fusion est égale à ladite température seuil, et dans laquelle ladite seconde couche diélectrique (D2) comprend des moyens perméables capables d'absorber par capillarité ledit matériau de ladite première couche diélectrique (D1), à l'état fondu, et en ce que lesdites armatures dudit condensateur interdigité comprennent deux électrodes interdigitées (E1, E2) pour former un transducteur capacitif, disposées sur ledit substrat diélectrique (S), dans lequel ledit matériau de ladite première couche diélectrique (D1) est en contact avec lesdites deux électrodes (E1, E2) et lesdits moyens perméables sont séparés dudit matériau de ladite première couche diélectrique (D1) et desdites électrodes interdigitées (E1, E2), lorsque ledit substrat diélectrique (S) n'est pas chauffé à des températures supérieures à ladite température de fusion dudit matériau de ladite première couche diélectrique (D1), et dans lequel, lorsque ledit substrat diélectrique (S) est chauffé à des températures supérieures à ladite température de fusion dudit matériau de ladite première couche diélectrique (D1), ledit matériau fond et imprègne par capillarité lesdits moyens perméables, faisant varier la permittivité diélectrique moyenne résultante de ladite structure diélectrique multicouche (D) et par conséquent l'impédance électrique du condensateur interdigité ayant comme armatures les électrodes (E1, E2).

2. Transpondeur RFID (1) selon la revendication précédente, **caractérisé par le fait que** le matériau de la première couche diélectrique (D1) est du polyéthylène glycol (PEG).

3. Transpondeur RFID (1) selon l'une quelconque des revendications précédentes, **caractérisé en ce que** ledit substrat diélectrique (S) est constitué d'une couche de matière plastique imperméable.

4. Transpondeur RFID (1) selon l'une quelconque des revendications précédentes, **caractérisé en ce que** ladite couche de protection (A) est une couche adhésive capable de fixer ensemble ladite première couche diélectrique (D1), ledit substrat diélectrique (S), lesdites deux électrodes (E1, E2) et ladite seconde couche diélectrique (D2), en empêchant le détachement de ladite première couche diélectrique (D1) dudit substrat diélectrique (S).

5. Transpondeur RFID (1) selon la revendication 1, **caractérisé par le fait que** le matériau de la première couche diélectrique (D1) est du polyéthylène glycol (PEG), en ce que ledit substrat diélectrique (S) est constitué d'une couche de matière plastique imperméable, et en ce que ladite couche protectrice (A) est une couche adhésive capable de fixer ensemble ladite première couche diélectrique (D1), ledit substrat diélectrique (S), lesdites deux électrodes (E1, E2) et ladite deuxième couche diélectrique (D2), empêchant le détachement de ladite première couche diélectrique (D1) dudit substrat diélectrique (S).

6. Procédé de fabrication d'un transpondeur RFID (1) comprenant des moyens de détection (11) du dépassement d'un seuil de température selon l'une quelconque des revendications 1 à 5, dans lequel ledit procédé comprend les étapes suivantes:

   A. fournir un substrat diélectrique (S) et lesdites électrodes interdigitées (E1, E2) disposées sur ledit substrat diélectrique (S);
   B. fabriquer ladite structure diélectrique multicouche (D);
   C. couper une partie de ladite structure diélectrique multicouche (D);
   D. appliquer ladite couche de protection (A) sur ladite structure diélectrique multicouche (D), en obtenant une couche supplémentaire;
   E. presser ladite couche supplémentaire sur lesdites électrodes interdigitées (E1, E2).

7. Procédé selon la revendication précédente, **caractérisé en ce que** ladite structure diélectrique multicouche (D) comprend une première couche diélectrique (D1), et une seconde couche diélectrique (D2) disposée sur ladite première couche diélectrique (D1) et séparée dudit substrat diélectrique (S), dans laquelle ladite première couche diélectrique (D1) comprend un matériau conformable par pression et dont la température de fusion respective est égale à ladite température seuil, et dans laquelle ladite seconde couche diélectrique (D2) comprend des moyens perméables capables d'absorber par capillarité ledit matériau de ladite première couche diélectrique (D1).

8. Procédé selon l'une quelconque des revendications 6 ou 7, **caractérisé en ce que** ladite étape B comprend les sous-étapes suivantes:

> B1. dissoudre le matériau de la première couche diélectrique (D1) dans de l'acétone à une concentration en poids de 20% pour obtenir une solution, et maintenir cette solution sous agitation à une température constante de 40°C;
> B2. maintenir ledit moyen perméable à une température constante de 23°C au moyen d'un système de cellules Peltier ou similaire;
> B3. dépôt de ladite solution obtenue dans ladite sous-étape A1 sur ledit moyen perméable par une technique de coulée en goutte-à-goutte ou par une autre technique additive compatible;
> B4. refroidissement dudit moyen perméable à une température prédéterminée, de telle sorte que ladite acétone s'évapore et que ledit matériau de ladite première couche diélectrique (D1) précipite et se dépose sur ledit moyen perméable.

9. Procédé selon l'une quelconque des revendications 6 à 8, **caractérisé en ce que** ladite couche de protection (A) est une couche adhésive capable de recouvrir ladite structure diélectrique multicouche (D).

10. Procédé selon la revendication 6, **caractérisé en ce que** ladite structure diélectrique multicouche (D) comprend une première couche diélectrique (D1), et une seconde couche diélectrique (D2) disposée sur ladite première couche diélectrique (D1) et séparée dudit substrat diélectrique (S), dans laquelle ladite première couche diélectrique (D1) comprend un matériau conformable par pression et dont la température de fusion respective est égale à ladite température seuil, et dans laquelle ladite deuxième couche diélectrique (D2) comprend un milieu perméable capable d'absorber par capillarité ledit matériau de ladite première couche diélectrique (D1), **en ce que** ladite étape B comprend les sous-étapes suivantes:

> B1. dissoudre le matériau de la première couche diélectrique (D1) dans de l'acétone à une concentration en poids de 20% pour obtenir une solution, et maintenir cette solution sous agitation à une température constante de 40°C;
> B2. maintenir ledit moyen perméable à une température constante de 23°C au moyen d'un système de cellules Peltier ou similaire;
> B3. dépôt de ladite solution obtenue dans ladite sous-étape A1 sur ledit moyen perméable par une technique de coulée en goutte-à-goutte ou par une autre technique additive compatible;
> B4. refroidissement dudit moyen perméable à une température prédéterminée, de telle sorte que ladite acétone s'évapore et que ledit matériau de ladite première couche diélectrique (D1) précipite et se dépose sur ledit moyen perméable, et **en ce que** ladite couche de protection (A) est une couche adhésive capable de recouvrir ladite structure diélectrique multicouche (D).

Fig. 1

Fig. 2

Fig. 3

Fig. 4

Fig. 5

| Physical status: | PEG200–PEG600 | | Waxy to | | | | | |
| | PEGs >600 | | solid liquid | | | | | |

| | PEG 200 | PEG 300 | PEG 400 | PEG 600 | PEG 1000 | PEG 4000 | PEG 10000 | PEG 35000 |
|---|---|---|---|---|---|---|---|---|
| Density at 20°C (g/cm³) | 1.12 | 1.13 | 1.13 | 1.13 | 1.2 | 1.2 | 1.2 | 1.2 |
| Melting point (°C): | $c$ –50 | –15– –10 | 4–8 | 17–22 | 35–40 | 53–58 | 55–60 | $c$ 60 |
| Vapour pressure a 20°C: | < 0.1 | < 0.1 | < 0.01 | < 0.01 | < 0.001 | < 0.001 | < 0.001 | < 0.001 |
| Water solubility (g/100 g): | ∞ | ∞ | ∞ | ∞ | 75 | 55 | 53 | 50 |

Fig. 6

(A)

(B)

(C)

(D)

Fig. 7

Fig. 8A

110X

Fig. 8B

T=40°C

T=23°C

T=23°C

T=23°C

T=23°C

(A)

(B)

(C)

(D)

Fig. 9

Fig. 10A

Fig. 10B

Fig. 11A-11E

(A)   (B)   (C)   (D)

Fig. 12

Fig. 13A          Fig. 13B

Fig. 14

Fig. 15

| Tag with chip | fr(MHz) | BW$_{3dB}$ (MHz) | Q |
|---|---|---|---|
| Pre-activation | 14.005 | 0.92 | 15.2 |
| Post-activation | 14.155 | 0.79 | 17.9 |

Fig. 16

Fig. 17a

Fig. 17B

Fig. 18

Fig. 19

Fig. 20

| Tag with chip | fr(MHz) | BW$_{3dB}$(MHz) | Q |
|---|---|---|---|
| Pre-activation | 35.775 | 5.44 | 6.58 |
| Post-activation | 39.525 | 6.53 | 6.05 |

Fig. 21

Fig. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103543146 A
- EP 2523147 A1
- US 2016328584 A
- WO 20160938 A2
- WO 2016060938 A2
- US 2019212210 A1
- US 20150116093 A1, Swager, Azzarelli
- US 20130099897 A1, Ian J. Forster
- US 20120182147 A1, Ian J. Forster

- JP 2011028424 A, ITO SHIGEO
- IT 102016000079657, R. Miscioscia, A. Citarella, F. Pascarella, G. Pandolfi, F. Loffredo, F. Villani, T. Fasolino, L. Quercia, C. Minarini
- US 2016328584 A1
- CN 103593746 A
- US 20160328584 A1, Shahriar Rokhsaz, Brian David Young, Ahmed Younis, John J. Paulos, Abhay Misra, Benjamin Cooke, Marwan Hassoun

**Non-patent literature cited in the description**

- **P. PURSULA** ; **J. MARJONEN** ; **H. RONKAINEN** ; **K. JAAKKOLA**. Wirelessly Powered Sensor Transponder For UHF RFID. *proc. Int. conf. TRANSDUCERS & EUROSENSORS '07, (The 14th International Conference on Solid-State Sensors, Actuators and Microsystems, Lyon, France*, 14 October 2007, 73-36
- **RIAD KANAN** ; **DARKO PETROVIC**. A SMART RFID Transponder. *ICWMC 2012: The Eighth International Conference on Wireless and Mobile Communications*, 2012, ISBN 978-1-61208-203-5, 36-41
- **SAJAL, S.** ; **ATANASOV, Y.** ; **BRAATEN, B.D.** ; **MARINOV, V.** ; **SWENSON, O.** A low cost flexible passive UHF RFID tag for sensing moisture based on antenna polarization. *Electro/Information Technology (EIT), 2014 IEEE International Conference on*, 05 June 2014, 542-545
- **TONI BJORNINEN** ; **JUKKA VOUTILAINEN** ; **LAURI SYDANHEIMO** ; **LEENA UKKONEN**. Characterization of HF RFID Tags Exposed to Moisture Based on Threshold Power Measurement. *PIERS Proceedings*, 12 August 2013, 815-818
- **AZZARELLI, JOSEPH M.** ; **KATHERINE A. MIRICA** ; **JENS B. RAVNSBAEK** ; **TIMOTHY M. SWAGER**. Wireless Gas Detection with a Smartphone via Rf Communication.. *Proceedings of the National Academy of Sciences*, 08 December 2014, vol. 111 (51), 18162-18166
- **DANEV, B.** ; **ZANETTI, D.** ; **CAPKUN, S.** On physical-layer identification of wireless devices. *ACM Comput. Surv.*, 2011, vol. 45 (1), 29
- How to design a 13.56 MHz customized tag antenna. *AN2866 Application note*, http://www.st.com/st-web-ui/static/active/cn/resource/technical/document/application_note/CD00221 490.pdf

- Designing an antenna for the M24LRxx-R and M24LRxxE-R dual interface I2C/RFID devices. *AN2972 Application note*, http://www.st.com/web/en/resource/technical/document/application_note/C D00232630.pdf
- **OTLES, S.** ; **YALCIN, B.** Intelligent food packaging. *Log Forum*, 2008, vol. 4 (4), 3, http://www.logforum.net/vol4/issue4/no3
- Commission Regulation (EC) No 450/2009 of 29 May 2009 on active and intelligent materials and articles intended to come into contact with food (Text with EEA relevance). *OJ L*, 30 May 2009, vol. 135, 3-11, http://data.europa.eu/eli/reg/2009/450/oj
- **R. MISCIOSCIA** ; **C. BORRIELLO** ; **G. PANDOLFI** ; **G. DE FILIPPO** ; **T. FASOLINO** ; **B. LANZA** ; **G. ZAPPA** ; **C. MINARINI**. Application of Polyvinylidene Fluoride interdigital capacitors as parasitic temperature-sensing loads in passive HF RFID transponders. *Proc. Of XX AISEM Annual conference*, 11 February 2019
- **TAOUKIS, P. S.** ; **LABUZA, T. P.** Applicability of time-temperature indicators as shelf life monitors of food products. *Journal of Food Sciences*, 1989, vol. 54, ISSN 1750-3841, 783-788
- **SHAODONG WANG** ; **XINGHAI LIU** ; **MEI YANG** ; **YU ZHANG** ; **KEYU XIANG** ; **RONG TANG**. Review of Time Temperature Indicators as Quality Monitors in Food Packaging. *Packag. Technol. Sci.*, 2015, vol. 28, 839-867
- Time temperature indicators (TTIs). **TAOUKIS, P.** ; **LABUZA, T. P.** Novel food packaging techniques. Cambridge, UK. Woodhead Publishing Ltd., 2003, vol. 590
- Chameleon Technology Enables Low-Cost Battery Free Wireless Sensors. *AND9209/D*, https://www.onsemi.com/pub/Collateral/AND9209-D.PDF

- *Chameleon™ Sensor Engine*, http://rfmicron.com/-technology/chameleon
- *SMARTRAC, RFMicron Release Passive RFID Temperature Sensor Technology*, http://www.rfidjournal.com/articles/view?14487
- *Smart Passive Sensors for Automotive Applications*, http://rfmicron.com/automotive
- *Health Care and Incontinence Management*, http://rfmicron.com/health-care
- *Smart Passive Sensors for Industrial Applications*, http://rfmicron.com/industrial
- MF1S50YYX_V1 MIFARE Classic EV1 1K - Mainstream contactless smart card IC for fast and easy solution development Rev. 3.2. *NXP product datasheet 279232*, 23 May 2018, https://www.nxp.com/-docs/en/data-sheet/MF1S50YYX_V1.pdf
- **A. S. ABU-ABED** ; **R. G. LINDQUIST**. Capacitive Interdigital Sensor with Inhomogeneous Nematic Liquid Crystal Film. *Progress In Electromagnetics Research B*, 2008, vol. 7, 75-87
- **R. IGREJA** ; **C.J. DIAS**. Analytical evaluation of the interdigital electrodes capacitance for a multi-layered structure. *Sensors and Actuators A*, 2004, vol. 112, 291-301
- Interdigitated Capacitor Sensor for Complex Dielectric Constant Sensing. **SHENG ZHANG**. Master Of Science In Engineering Thesis. The University Of Texas At Austin
- Polyethylene glycol [MAK Value Documentation, 1998. The MAK-Collection for Occupational Health and Safety. 1998
- **C. ÖZDEMIR** ; **A. GUNER**. European Polymer Journal. Dow Chemical Company, 2002, vol. 43, 3068-3093
- *MFRC522, Standard performance MIFARE and NTAG frontend*, 27 April 2016, https://www.nxp.com/docs/en/data-sheet/MFRC522.pdf